# EUROPEAN PATENT SPECIFICATION

(11) **EP 3 485 960 B1**
(45) Date of publication and mention of the grant of the patent: **27.01.2021**
(21) Application number: 17814792.2
(22) Date of filing: 19.06.2017
(51) Int. Cl.: B01D 53/14, B01D 53/62, F23J 15/04

(54) **METHOD AND SYSTEM FOR SEPARATING CO2 BASED ON CHEMICAL ABSORPTION**
VERFAHREN UND SYSTEM ZUR TRENNUNG VON CO2 AUF BASIS EINER CHEMISCHEN ABSORPTION
PROCÉDÉ ET SYSTÈME DE SÉPARATION DE CO2 BASÉ SUR L' ABSORPTION CHIMIQUE

(30) Priority: 20.06.2016 ES 201600519
(43) Date of publication of application: 22.05.2019
(73) Proprietor: Universidad De Sevilla, 41013 Sevilla (ES)
(72) Inventor: VEGA BORRERO, Fernando, 41092 - Sevilla (ES); NAVARRETE RUBIA, Benito, 41092 - Sevilla (ES); CAMINO FERNÁNDEZ, José Antonio, 41092 - Sevilla (ES); CANO PALACIOS, Mercedes, 41092 - Sevilla (ES); CORTÉS GALEANO, Vicente Jesús, 41092 - Sevilla (ES)
(74) Representative: Pons
(86) International application number: PCT/ES2017/000073
(87) International publication number: WO 2017/220823

(56) References cited:
- EP-A1- 2 990 091
- WO-A1-2009/035340
- US-A1- 2011 041 685
- US-A1- 2011 041 685
- US-A1- 2016 067 650
- US-B1- 6 800 120
- US-B2- 8 192 530
- US-B2- 8 833 081

## Description

### OBJECT OF THE INVENTION

The present invention relates to a method for separating CO₂ based on regenerative chemical absorption, which uses an absorber where the CO₂ remains retained in an absorbent liquid, and a regenerator where the CO₂ is released, obtaining a regenerated absorbent that is re-used in the absorber. The invention proposes a configuration of the entire capturing process which allows a more efficient operation and, therefore, significantly reduces the energy requirements mainly associated with the regeneration of the absorbent, as well as a lesser thermal degradation of same.

### BACKGROUND OF THE INVENTION

The regenerative chemical absorption of acid gases has been used since the 1930s in a number of industrial processes. The basic process was patented by R. R. Bottoms (US Patent No. 1783901), and after it, a number of configurations and/or chemical absorbents have been developed over the years for the purpose of optimizing the entire process for separating CO₂ and, in particular, significantly reducing the energy consumption mainly associated with the regeneration of the absorbent.

Different variants of the conventional arrangement of the absorber have also been proposed, described in specialized literature (US Patent No. 8192530). On the other hand, most of the patents registered in this field concern modifications applied in the regenerator: harnessing energy from the sensible heat of the outlet stream of the regenerator, preheating the condensates at the inlet of the regenerator, partially evaporating the stripped at the outlet of the regenerator such that the total energy input into drum of the regeneration unit is minimized, pressurizing the upper section of the regenerator to lower the water/CO₂ ratio in the *stripping* stream of the regeneration unit, etc. All these modifications have led to important energy reductions in the regeneration of the absorbent compared with the conventional arrangement.

In recent years, processes for separating CO₂ based on chemical absorption have sparked enormous interest on an industrial level as a result of the possibility of being used in the field of CO₂ capture and storage technologies, mainly in processes for producing electric energy, in the cement industry and in the production of steel. The earliest references to patents for applying chemical absorption for mitigating CO₂ emissions into the atmosphere in specialized literature date back to the mid-1990s (WO 1995/021683). Despite being considered a mature technology in the industrial field, the application of chemical absorption for separating CO₂ coming from combustion and/or process gases entails certain difficulties which must be solved in order to develop it on a commercial scale, which still have not been solved in an effective manner.

These difficulties are mainly summarized in the high energy consumption associated with the regeneration of the absorbent and in the degradation said absorbent experiences due to oxidative and thermal mechanisms occurring during the capture process. These aspects mean that the use of a chemical absorption unit in an electrical production facility based on the combustion of fossil fuels can involve up to a 10 point-loss of net yield in the power cycle, rendering its implementation on an industrial scale economically inviable today (Pulverized coal oxycombustion power plants. Volume 1: Bituminous coal to electricity, Final report 1291. DOE-NETL, 2007, pp. 5-6).

With respect to the degradation of the absorbent, this parameter is extremely relevant in the definition of the operating conditions in the regeneration unit. According to G. T. Rochelle (Rochelle, G. T.; Current Opinion in Chemical Engineering, 2012, 1(2): 183-90), the process for separating CO₂ by means of chemical absorption based on compounds with rapid kinetics, as occurs with the use of primary and secondary amines, is favored by operating at high temperature and high pressure in terms of energy consumption per ton of CO₂. Therefore, the operating temperature in the desorption unit is defined on the basis that it produces the maximum degradation allowable in the absorbent, that is, that the observed degradation ratios are offset by a significant reduction in the specific consumption per ton of CO₂ captured during the regeneration of the absorbent (Oexmann, J.; Ather, A., International Journal of Greenhouse Gas Control, 2010, 4(1), 36-43).

Today, there are a number of companies holding licenses for chemical absorption processes on a commercial scale applied specifically to the capture of CO₂ in industrial processes, which shows the interest that these developments spark in the field of environmental technology and chemical and industrial processes where the separation of CO₂ acid gases from a gas stream is required.

Document US2011/041685 A1 discloses a method for separating CO₂ from a gas stream based on chemical absorption according to the preamble of claim 1 and a system for carrying out said method according to the preamble of claim 6.

### DESCRIPTION OF THE INVENTION

The present invention proposes an alternative configuration with respect to the conventional system of separating CO₂ from a gas stream by means of chemical absorption, based on the optimization of the cyclic operating capacity of the absorbent used by means of a particular arrangement of the streams involved in the CO₂ absorption-desorption process and a very thorough control of the operating conditions of the inlet streams into the regenerator, mainly in terms of temperature and distribution of feed flow rates to the equipment.

In this sense, the energy consumption associated with the regeneration process is significantly reduced and favors lower thermal degradation of the absorbent. This invention has been developed to be applied in technologies for capturing CO₂ from stationary sources, but they may be applicable for any process which requires separating acid gases from a gas stream.

The invention consists of a process and a system for regenerative chemical absorption applied to the capture of CO₂ from stationary sources, which allows adjusting the degree of regeneration required by the absorbent by significantly reducing the energy consumption of the process. In general, the objective of the proposed configuration is to optimize the cyclic capacity during operation of the absorbent so as to minimize the energy requirements in the drum of the absorber system.

To achieve this objective, the present invention provides a method as set forth in claim 1 for regenerative chemical absorption applied to the capture of CO₂ from stationary sources, which allows adjusting the degree of regeneration of the absorbent by means of using the described system, and in which the treatment of the different gas streams generated takes place.

Therefore, the present disclosure relates to a method for separating CO₂ coming from a gas stream, comprising the following steps:
a) absorbing the CO₂ coming from a gas stream to be treated at a temperature preferably less than 60 °C, preferably between 40 °C and 60 °C, and a pressure comprised in a range of between 1 and 1.5 bar, by means of putting said stream in contact in an absorber with an absorbent solution in which the CO₂ will be retained;
b) recirculating up to 75 % of the stream comprising the CO₂-rich absorbent solution coming from step a) to the lower bed of the absorption system. The operation under these conditions allows adjusting the cyclic working capacity range of the absorbent during operation in an optimized manner;
c) desorbing CO₂ in a regenerator from the stream comprising the CO₂-rich absorbent solution coming from step a) not recirculated to step b) at a temperature of between 80 °C and 120 °C, a pressure of between 1.5 and 5 bar and a steam stripping flow rate of between 10 and 90 % by volume with respect to the desorbed CO₂ flow rate, where said stream is split into at least two streams by means of a set of heat exchangers, prior to the inlet of the regenerator;
d) recovering the absorbent solution resulting from step c) from the absorber of step a).

In a preferred embodiment, the CO₂ is absorbed from the stream to be treated in step a) of the method of the invention in the absorber unit from the gas phase to the liquid phase, where it is dissolved and chemically bonds with the absorbent or absorbent solution. It is also possible to use absorbents which only operating with physical mechanisms, and not chemical mechanisms, of absorption.

In a preferred embodiment, the absorbent solution contained in the absorption unit comprises any one aqueous solution of CO₂ absorbents, and more preferably an aqueous solution of a compound having an amine base, which can be selected, though without being limited to one amine from the list comprising monoethanolamine (MEA), triethanolamine (TEA), methyldiethanolamine (MDEA), diisopropanolamine (DIPA) and diglycolamine (DGA), piperidine (PP), piperazine (PZ), 2-amino-2-methyl-1-propanol (AMP), monomethylethanolamine (MMEA), etc., or any of their combinations.

The absorption system used in this method which is based on the fundamental incorporation of an absorber which receives the gas to be treated with CO₂, which is absorbed by means of a absorbent solution, a set of heat exchangers conditioning the temperature of the CO₂-rich absorbent solution exiting the absorber and a regenerator, in which the absorbent solution is regenerated, releasing it from the CO₂, for re-using it and incorporating it back into the absorber.

Based on this basic configuration, the system of this invention is as set forth in claim 6. The system proposes first the incorporation of a recirculation line directed to the absorber constituting a bypass of the outlet of the CO₂-rich absorbent solution, which is partially conducted back to the absorber for the purpose of optimizing the CO₂ absorption capacity of the absorbent used. Secondly, the system incorporates a particular set of heat exchangers which, besides thermally conditioning the CO₂-rich solution, divides it into at least two streams which are introduced in the regenerator in areas located at different heights, stratifying the feed into the regenerator, which causes a decrease in the temperature profile of the regenerator, achieving a reduction in energy consumption associated with the regeneration of the absorbent.

In this manner, the system allows significantly reducing the specific consumption associated with the regeneration of the absorbent compared with a conventional configuration of the absorption system. It has been demonstrated that the level of reduction of consumption is higher the more concentrated the acid gas is in the gas stream to be treated.

The invention assures, therefore, an operation of the regenerator at a thermal level that is lower than the level proposed in conventional operating modes. As a result, it is possible to work with a higher load or concentration of CO₂ in the regenerated absorbent and, in this manner, to shift the cyclic operating capacity thereof to areas where the energy consumption associated with desorbing CO₂ is lower. The decrease obtained in the temperature profile of the regenerator reduces the degradation rate of the absorbent associated with thermal mechanisms.

### DESCRIPTION OF THE DRAWINGS

To complement the description that is being made and for the purpose of helping to better understand the features of the invention, according to a preferred practical embodiment thereof, a set of drawings is attached as an integral part of said description, wherein the following has been depicted with an illustrative and non-limiting character:
Figure 1.- Shows a diagram of the CO₂ absorption-desorption system of the invention.
Figure 2.- Shows a detail of the set of heat exchangers.
Figure 3. Shows a graph depicting the enthalpy of CO₂ solubility depending on the load of the absorbent expressed in moles of CO₂ per mole of absorbent (generic absorbent). The cyclic operating capacity for a conventional configuration and a configuration according to the system of the invention are indicated in a generic manner.

### PREFERRED EMBODIMENT OF THE INVENTION

A preferred embodiment of the system object of this invention is described below.

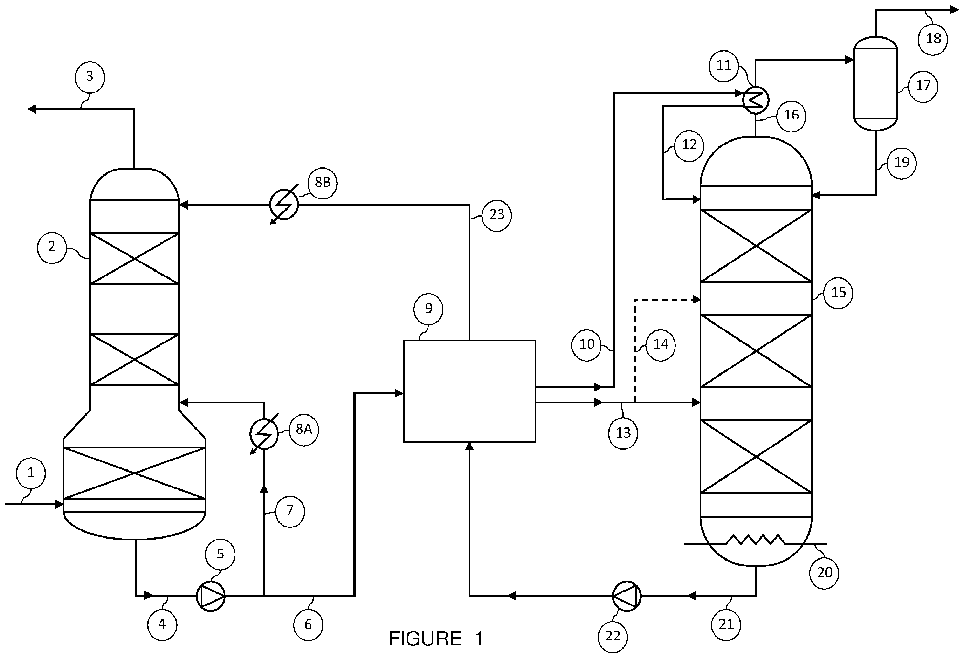

Specifically, the absorption-desorption system of CO₂ including the elements described below has been depicted in Figure 1:
1.- Gas stream to be treated
2.- Absorber
3.- Clean gas
4.- CO₂-rich outlet absorbent solution
5.- First impeller pump
6.- CO₂-rich absorbent solution
7.- Recirculated CO₂-rich absorbent solution
8.A.- First heat exchanger
8.B.- Second heat exchanger
9.- Set of exchangers
10.- Primary stream
11.- Heat exchanger for harnessing energy from the gas stream at the outlet of the regenerator
12.- Main inlet stream into the CO₂-rich absorbent solution regenerator
13.- Secondary stream
14.- Alternative inlet streams into the CO₂-rich absorbent solution regenerator
15.- Regenerator
16.- Gas outlet stream from the regenerator
17.- Condensate separator
18.- Gas stream having a high concentration of CO₂
19.- Condensate stream
20.- Drum
21.- Stripped regenerated absorbent solution
22.- Second impeller pump
23.- Inlet stream of regenerated absorbent solution

As can be observed in Figure 1, the system incorporates an absorber (2) comprising a packing column which may be both structured and non-structured, and a lower bed, which receives the gas stream to be treated (1) which will come into contact in the absorber (2) with an absorbent liquid which is used for retaining CO₂ of the gas to be treated (1). The absorber (2) incorporates a CO₂ (4)-rich outlet absorbent solution, an inlet for the inlet stream of regenerated absorbent solution (23), a stream of recirculated CO₂-rich absorbent solution (7) and an outlet through which the clean gas (3) free of CO₂ is discharged.

The inlet stream of regenerated absorbent solution (23) coming from the regenerator (15) is at a temperature which has been adjusted to values close to that of the gas stream to be treated (1) by means of using a second heat exchanger (8B).

On the other hand, the absorber (2) incorporates an inlet for recirculated CO₂-rich absorbent solution recirculation line (7), which is conducted back to the lower bed of the absorber (2) for the purpose of increasing the load thereof by means of a first heat exchanger (8A) which lowers its temperature.

In a preferred embodiment, the design of the absorber (2) requires an increase in section in the lower bed with respect to the rest of the column, as shown in Figure 1.

It can also be seen in Figure 1 that the CO₂-rich outlet absorbent solution (4) is removed from the absorber (2) at the lower part thereof and impelled by means of a first impeller pump (5) which impels the CO₂-rich outlet absorbent solution (4) to then be separated into the recirculated CO₂-rich absorbent solution (7) and into a CO₂-rich absorbent solution (6), which is previously introduced in the set of heat exchangers (9).

The set of heat exchangers (9) receives the mentioned CO₂-rich absorbent solution (6), where the temperature of this stream is adjusted in an optimized manner before being split and directed to the regenerator (15), and it receives a stripped regenerated absorbent solution (21) coming from the regenerator (15), and the inlet stream of regenerated absorbent solution (23) exits the set of heat exchangers (9), directed to the absorber (2), and a primary stream (10) and a secondary stream (13) also exit as a consequence of the mentioned splitting of the CO₂-rich absorbent solution (6).

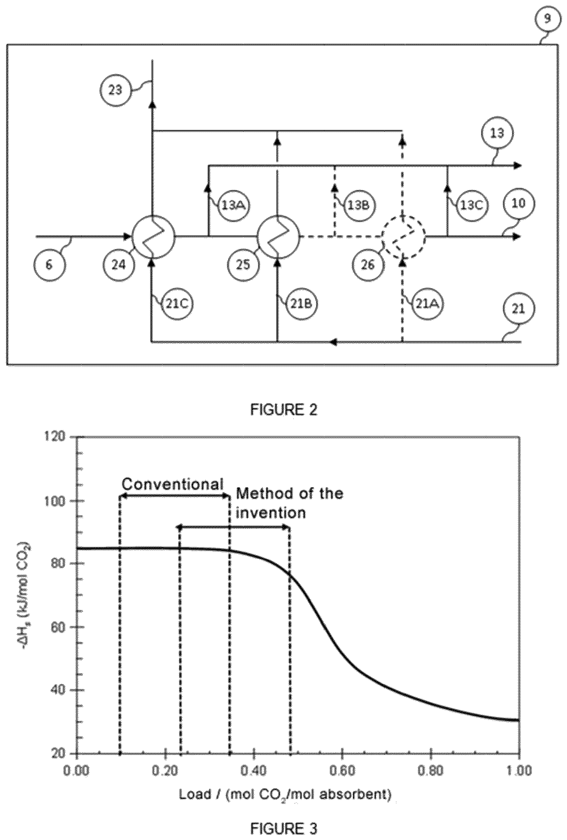

The set of heat exchangers (9) comprising the following elements can be seen in Figure 2:
6.- CO₂-rich absorbent solution
9.- Set of exchangers
10.- Primary stream
13.- Secondary stream
13.A.- Alternative for removing from the first exchanger the secondary inlet stream into the CO₂-rich absorbent solution regenerator
13.B.- Alternative for removing from the second exchanger the secondary inlet stream into the CO₂-rich absorbent solution regenerator
13.C.- Alternative for removing from successive exchangers the secondary inlet stream into the CO₂-rich absorbent solution regenerator
21.- Stripped regenerated absorbent solution
21.A.- Alternative for feeding regenerated absorbent solution to successive exchangers in the set of exchangers
21.B.- Alternative for feeding regenerated absorbent solution to the second exchanger in the set of exchangers
21.C.- Alternative for feeding regenerated absorbent solution to the first exchanger in the set of exchangers
23.- Regenerated solution inlet stream into the absorber
24.- First internal exchanger of the set of exchangers
25.- Second internal exchanger of the set of exchangers
26.- Successive exchangers of the set of exchangers

The set of exchangers (9) depicted in Figure 2 comprises a series of N internal heat exchangers (24, 25, 26), preferably between 2 to 4 heat exchangers, where the CO₂ -rich absorbent solution (6) is heated at different levels by means of the use of the stripped regenerated absorbent solution (21) coming from the bottom of the regenerator (15). The stream of -rich absorbent solution CO₂ (6) is split into two main streams. The primary stream (10) is heated by means of the use of all the internal heat exchangers (24, 25, 26), whereas the secondary stream (13) can be removed at the outlet of each of the internal exchangers, giving rise to inner streams (13A, 13B, 13C). The stream of stripped regenerated absorbent solution (21) can in turn be split into different substreams, referred to as (21A, 21B, 21C), to achieve a more precise adjustment of the thermal level of the primary stream of the rich solution (10) and, therefore, of the temperature profile of the regenerator (15).

The distribution of the CO₂-rich absorbent solution (6) between the primary stream (10) and the secondary stream (11) is preferably established in the range of between 0.25 and 0.75. The primary stream (10) is then preheated in an indirect contact second exchanger (11) indirect contact using the outlet stream from the regenerator (16), at a temperature greater than 100 °C, giving rise to a main inlet stream into the regenerator (12).

The regenerator (15) receives the stream from the absorber (2) at different heights and temperatures, such that the degree of regeneration of the absorbent is adjusted in an optimal manner.

The main inlet stream into the regenerator (12) is introduced in the upper part of the regenerator (15). On the other hand, the secondary stream (13) is introduced at a temperature less than the temperature set for the primary stream (10) in an intermediate bed of the regenerator (15), Achieving a temperature profile which optimizes the energy requirements of the entire capturing process. The secondary stream (13) can in turn be split into another additional stream (14) in order to be fed in at different heights of the regenerator (15).

This configuration allows obtaining a partial regeneration of the absorbent, shifting the cyclic capacity thereof into areas with a lower energy requirement of CO₂ desorption. The energy necessary for the regeneration of the absorbent to occur is provided to the regenerator (15) by means of a drum (20) preferably using vapor as the working fluid.

On the other hand, the outlet stream (16) at the upper part of the regenerator, which stream is primarily made up of CO₂ and water vapor, is introduced in a separator (17), where the stream having a high concentration of CO₂ saturated in water (18) and a condensate stream (19) are obtained, which is subsequently recirculated to the regenerator (15).

Lastly, the stripped regenerated absorbent solution (21) is removed from the lower part of the regenerator (15) and impelled by means of a second pump (22) to the set of exchangers (9) prior to being reincorporated into the absorption system (23).

The regenerator (15) preferably works in a pressure range comprised between 1.5 and 5 bar, and at a maximum temperature less than 120 °C, more preferably, in a temperature range comprised between 100 °C y 120 °C, such that lesser degradation of the absorbent is assured.

The invention is illustrated below by means of tests performed by the inventors, which clearly shows the specificity and effectiveness of the method of the invention for capturing CO₂.

Particularly, a process for separating CO₂ from a synthetic gas stream has been performed in a laboratory-scale unit based on two operative configurations which correspond on one hand to a conventional configuration and on the other to a configuration according to the system of the invention.

In this sense, A synthetic gas flow rate of 7 L/min, with a composition of 60 %v/v CO₂, saturated with water vapor and completed with N₂ has been used. Monoethanolamine in aqueous solution at 30 %w/w has been used as absorbent, as it is a reference absorbent. The amount total of absorbent used in the system is 2 L. The absorption of CO₂ is performed at a pressure of 1 atm and at a temperature of 50 °C in a column having 3 cm in diameter and 2 m in height, using as an absorption bed 6 mm ceramic Raschig rings. The regeneration of the absorbent is performed at a pressure of 2 bar in a column having 3 cm in diameter and 1 m in height using 6 mm stainless steel 316L Raschig rings.

The conventional configuration consisted of having a recirculation rate in the absorber of 0 (7), a single internal heat exchanger (24) makes up the set of exchangers (9) and the infeeding of the regenerator (15) is performed by means of using a single primary stream (10) introduced at the upper part of the regenerator (15). The absorbent flow rate was set at 7.01 kg/h, which corresponds with an L/G ratio equal to 12, with the inlet temperature into the absorber being 49 °C.

The configuration of the invention uses a partial recirculation of the stream of recirculated CO₂-rich absorbent solution (7), a set of exchangers (9) made up of internal heat exchangers (24, 25), and the inlet stream has been distributed to the regenerator in two streams: a primary stream (10) in the upper part of the regenerator (15) and a secondary stream (13) in the intermediate area of the regenerator (15). This secondary stream (13) was removed at the outlet of the first internal heat exchanger (24) of the set of exchangers (9). The absorbent flow rate was set at 8.18 kg/h, which corresponds with an L/G ratio equal to 14, with the inlet temperature of the gas into the absorber being 47 °C.

The most relevant operating conditions and the results obtained are summarized in Table 1. The operation by means of the method of the invention allowed increasing the cyclic capacity of the absorbent and the CO₂ separation yield during the separation operation as a result of a higher load of the rich absorbent in the absorption step. This increase in load is primarily due to the recirculation of part of the recirculated CO₂-rich absorbent solution (7). Stratifying the feed into the regenerator (15) caused a decrease in the temperature profile in the regenerator (15) and, therefore, a stripped solution with a higher load of CO₂. This shift in the cyclic operating capacity of the absorbent allowed the use of the new configuration to achieve an 11 % reduction of the specific consumption of energy associated with the regeneration of the absorbent, producing a net benefit with respect to the conventional configuration of processes of this type. Furthermore, the lower thermal level obtained in the regenerator favors a reduction of the degradation of the absorbent associated with thermal mechanisms.

| Table 1 | | | | **Configuration** | |
|---|---|---|---|---|---|
| | | | Units | **Conventional** | **Invention** |
| Operating parameters | | | | | |
| Absorber | L/G ratio | | kg/kg | 12 | 14 |
| | Recirculation rate | | % | - | 20 |
| Regenerator | Temperature at bottom | | °C | 120 | 118 |
| | Primary feed | Flow rate | kg/h | 7.01 | 5.73 |
| | | Temperature | °C | 112 | 108 |
| | Secondary feed | Flow rate | kg/h | - | 2.45 |
| | | Temperature | °C | - | 100 |
| Distribution in set (21C/21B) | | | - | 100/0 | 80/20 |
| Results | | | | | |
| Stripped absorbent load | | | mol CO₂ / mol absorbent | 0.15 | 0.19 |
| Rich absorbent load | | | mol CO₂ / mol absorbent | 0.34 | 0.41 |
| Cyclic capacity | | | mol CO₂ / mol absorbent | 0.19 | 0.22 |
| CO₂ capture yield | | | % | 96 | 98 |
| Specific consumption of captured CO₂ | | | GJ/t CO₂ | 4.55 | 4.05 |

## Claims

1. Method for separating CO₂ from a gas stream based on chemical absorption, comprising the following steps:
a) absorbing the CO₂ coming from the gas stream to be treated at a temperature of between 40 °C and 60 °C and a pressure in a range of between 1 and 1.5 bar, by means of putting said stream in contact in an absorber with an absorbent solution in which the CO₂ will be retained;
b) recirculating into the absorber up to 75 % of the stream comprising the CO₂-rich absorbent solution coming from step a);
c) desorbing CO₂ in a regenerator from the stream comprising the CO₂-rich absorbent solution coming from step a) not recirculated to step b) at a temperature of between 80 °C and 120 °C a pressure of between 1.5 and 5 bar and a steam stripping flow rate of between 10 and 90 % by volume with respect to the desorbed CO₂ flow rate, **characterized in that** the stream comprising the CO₂-rich absorbent solution is split into at least two streams by means of a set of heat exchangers, prior to the inlet of the regenerator, wherein the at least two streams are a primary stream (10) and a secondary stream (13), wherein both are directed to an upper part and to an intermediate bed of the regenerator (15), respectively, and wherein a heating of the primary stream (10) is carried out in internal heat exchangers (24, 25, 26) of the set of heat exchangers (9) and the secondary stream (13) is obtained from inner streams (13A, 13B, 13C) which are removed at the outlet of each of the internal exchangers (24, 25, 26); and
d) recovering the absorbent solution (21) resulting from step c) from the absorber of step a), wherein the stream of the stripped regenerated absorbent solution (21) resulting from step c) is in turn split into different substreams (21A, 21B, 21C) which enter each of the internal heat exchangers (24, 25, 26).

2. Method according to claim 1, wherein the CO₂ of the gas stream to be treated in step a) is transferred to the liquid phase where it is dissolved and chemically bonds to the absorbent.

3. Method according to any of the preceding claims, wherein the recirculated flow rate of step b) reaches between 25 % and 75 % of the total of the CO₂-rich solution coming from step a).

4. Method according to any of the preceding claims, wherein the recirculation of the stream coming from step b) takes place in the lower bed of the absorber of step a).

5. Method according to any of the preceding claims, wherein the streams coming from step c) are introduced in areas located at different heights of the regenerator of step d).

6. System for carrying out the method described in any one of the preceding claims, comprising:
- an absorber (2) comprising a packed column and a lower bed, which has:
- an inlet receiving the gas stream to be treated (1) which will come into contact in the absorber (2) with an absorbent liquid which is used for retaining the CO₂ from the gas to be treated (1),
- an outlet for a stream of CO₂-rich absorbent solution (4),
- an inlet for an inlet stream of regenerated absorbent solution (23),
- an inlet for a stream of recirculated CO₂-rich absorbent solution (7), and
- an outlet through which the clean gas (3) free of CO₂ is discharged,
- a regenerator (15)
which receives a main inlet stream into CO₂-rich absorbent regenerator (12),
from which there departs an outlet stream of stripped regenerated absorbent (21), and an outlet stream (16) mainly made up of CO₂ and water vapor, and
comprising a drum (20) which generates the energy necessary for regenerating the absorbent,
- a set of heat exchangers (9) located between the absorber (2) and the regenerator (15)
which receives the CO₂-rich absorbent solution (6),
as well as a stripped regenerated absorbent solution (21) coming from the regenerator (15), and
from which there exits an inlet stream of regenerated absorbent solution (23) directed to the absorber (2), and
from which there exits a stream of CO₂-rich absorbent which is directed to the regenerator (15),
wherein the absorber (2) additionally comprises an inlet for a recirculated CO₂ - rich absorbent solution recirculation line (7), which is conducted back to the lower bed of the absorber (2) for the purpose of increasing the load thereof by means of a first heat exchanger (8A) which lowers its temperature;
**characterized in that** within the set of heat exchangers (9) the stream of CO₂-rich absorbent solution (6) is split into a primary stream (10) and a secondary stream (13), wherein both are directed to the upper part and to the intermediate bed of the regenerator (15), respectively, **in that** the set of heat exchangers (9) comprises internal heat exchangers (24, 25, 26) which heat the primary stream (10), and the secondary stream (13) is obtained from inner streams (13A, 13B, 13C) which are removed at the outlet of each of the internal exchangers (24, 25, 26), **and in that** the stream of the stripped regenerated absorbent solution (21) is in turn split into different substreams (21A, 21B, 21C) which enter each of the internal heat exchangers (24, 25, 26).

7. System according to claim 6, **characterized in that** it additionally comprises a second indirect contact exchanger (11) in which the primary stream (10) is preheated using the outlet stream from the regenerator (16), giving rise to the main inlet stream into the regenerator (12).

8. System according to claim 6, **characterized in that** the secondary stream (13) is split into an additional stream (14) in order to be fed in at different heights of the regenerator (15).

## Patentansprüche

1. Verfahren zum Abscheiden von CO₂ aus einem Gasstrom, basierend auf chemischer Absorption, umfassend die folgenden Schritte:
a) Absorbieren von CO₂, das aus dem Gasstrom kommt, der bei einer Temperatur zwischen 40 °C und 60 °C und einem Druck in einem Bereich zwischen 1 und 1,5 bar behandelt werden soll, indem der Strom in Kontakt mit einem Absorber mit einer absorbierenden Lösung gebracht wird, in der CO₂ zurückgehalten wird;
b) Rezirkulieren von bis zu 75 % des Stroms, der die CO₂-reiche absorbierende Lösung aus Schritt a) umfasst;
c) Desorbieren von CO₂ in einem Regenerator aus dem Strom, der die CO₂-reiche absorbierende Lösung aus Schritt a) umfasst, die in Schritt b) nicht rezirkuliert wurde, bei einer Temperatur zwischen 80 °C und 120 °C, einem Druck zwischen 1,5 und 5 bar und einer Dampfstripp-Durchflussrate zwischen 10 und 90 Vol.-% bezogen auf die desorbierte CO₂-Durchflussrate, **dadurch gekennzeichnet, dass** der Strom, der die CO₂-reiche absorbierende Lösung umfasst, mittels eines Satzes von Wärmetauschern vor dem Einlass des Regenerators in mindestens zwei Ströme geteilt wird, wobei die mindestens zwei Ströme ein Primärstrom (10) und ein Sekundärstrom (13) sind, wobei beide zu einem oberen Teil bzw. zu einem Zwischenbett des Regenerators (15) geleitet werden und wobei eine Erwärmung des Primärstroms (10) in internen Wärmetauschern (24, 25, 26) des Satzes von Wärmetauschern (9) ausgeführt wird, und der Sekundärstrom (13) aus inneren Strömen (13A, 13B, 13C) erhalten wird, die am Auslass jedes der internen Wärmetauscher (24, 25, 26) entfernt werden; und
d) Rückgewinnen der aus Schritt c) resultierenden absorbierenden Lösung (21) aus dem Absorber aus Schritt a), wobei der aus Schritt c) resultierende Strom der gestrippten regenerierten aborbierenden Lösung (21) wiederum in unterschiedliche Teilströme (21A, 21B, 21C) geteilt wird, die in jeden der internen Wärmetauscher (24, 25, 26) eintreten.

2. Verfahren nach Anspruch 1, wobei das CO₂ des in Schritt a) zu behandelnden Gasstroms in die flüssige Phase überführt wird, wo er gelöst wird und sich chemisch an das Absorptionsmittel bindet.

3. Verfahren nach einem der vorhergehenden Ansprüche, wobei die Rezirkulationsdurchflussrate aus Schritt b) zwischen 25 % und 75 % der Gesamtmenge der aus Schritt a) stammenden CO₂-reichen Lösung erreicht.

4. Verfahren nach einem der vorhergehenden Ansprüche, wobei die Rezirkulation des aus Schritt b) stammenden Stroms in dem unteren Bett des Absorbers aus Schritt a) erfolgt.

5. Verfahren nach einem der vorhergehenden Ansprüche, wobei die aus Schritt c) stammenden Ströme in Bereiche eingeleitet werden, die sich an unterschiedlichen Höhen des Regenerators von Schritt d) befinden.

6. System zum Ausführen eines Verfahrens, wie in einem der vorhergehenden Ansprüche beschrieben, umfassend:
- einen Absorber (2), umfassend eine verpackte Säule und ein unteres Bett, das aufweist:
- einen Einlass, der den zu behandelnden Gasstrom (1) aufnimmt, der im Absorber (2) mit einer absorbierenden Flüssigkeit in Kontakt kommt, die zum Zurückhalten von CO₂ aus dem zu behandelnden Gas (1) verwendet wird,
- einen Auslass für einen Strom von CO₂-reicher absorbierender Lösung (4),
- einen Einlass für einen Einlassstrom von regenerierter absorbierender Lösung (23),
- einen Einlass für einen Strom von rezirkulierter CO₂-reicher absorbierender Lösung (7) und
- einen Auslass, durch den Reingas (3) ohne CO₂ ausgestoßen wird,
- einen Regenerator (15),
der einen Haupteinlassstrom in einen CO₂-reichen Absorptionsmittelregenerator (12) aufnimmt, von dem ein Auslassstrom eines gestrippten regenerierten Absorptionsmittels (21) und ein Auslassstrom (16), der hauptsächlich aus CO₂ und Wasserdampf besteht, abgeht, umfassend eine Trommel (20), welche die zur Regeneration des Absorptionsmittels notwendige Energie erzeugt,
- einen Satz von Wärmetauschern (9), der sich zwischen dem Absorber (2) und dem Regenerator (15) befindet, der die CO₂-reiche absorbierende Lösung (6) aufnimmt, sowie eine gestrippte regenerierte absorbierende Lösung (21), die aus dem Regenerator (15) stammt und aus der ein Einlassstrom aus regenerierter absorbierender Lösung (23) austritt, die zu dem Absorber (2) geleitet wird, und aus dem ein Strom von CO₂-reichem Absorptionsmittel austritt, der zu dem Regenerator (15) geleitet wird,
wobei der Absorber (2) zusätzlich einen Einlass für eine rezirkulierte CO₂-reiche absorbierende Lösung (7) umfasst, die zum unteren Bett des Absorbers (2) zurückgeführt wird, um dessen Last mittels eines ersten Wärmetauschers (8A) zu erhöhen, der die Temperatur davon senkt;
**dadurch gekennzeichnet, dass** innerhalb des Satzes von Wärmetauschern (9) der Strom der CO₂-reichen absorbierenden Lösung (6) in einen Primärstrom (10) und einen Sekundärstrom (13) geteilt wird, wobei beide zum oberen Teil bzw. zum Zwischenbett des Regenerators (15) geleitet werden, **dadurch dass** der Satz von Wärmetauschern (9) interne Wärmetauscher (24, 25, 26) umfasst, die den Primärstrom (10) erwärmen, und der Sekundärstrom (13) aus inneren Strömen (13A, 13B, 13C) erhalten wird, die am Auslass jedes der internen Wärmetauscher (24, 25, 26) entfernt werden, **und dadurch, dass** Strom der gestrippten regenerierten aborbierenden Lösung (21) wiederum in unterschiedliche Teilströme (21A, 21B, 21C) geteilt wird, die in jeden der internen Wärmetauscher (24, 25, 26) eintreten.

7. System nach Anspruch 6, **dadurch gekennzeichnet, dass** es zusätzlich einen zweiten indirekten Kontaktaustauscher (11) umfasst, in dem der Primärstrom (10) unter Verwendung des Auslassstroms von dem Regenerator (16) vorgewärmt wird, um den Haupteinlassstrom in den Regenerator (12) ansteigen zu lassen.

8. System nach Anspruch 6, **dadurch gekennzeichnet, dass** der Sekundärstrom (13) in einen zusätzlichen Strom (14) geteilt wird, um in unterschiedlichen Höhen des Regenerators (15) eingespeist zu werden.

## Revendications

1. Procédé de séparation de CO₂ d'un flux de gaz basé sur l'absorption chimique, comprenant les étapes suivantes :
a) absorber le CO₂ provenant du flux de gaz à traiter à une température comprise entre 40 °C et 60 °C et à une pression dans une plage comprise entre 1 et 1,5 bars, au moyen de la mise en contact dudit flux dans un absorbeur avec une solution absorbante dans laquelle le CO₂ sera retenu ;
b) faire recirculer dans l'absorbeur jusqu'à 75 % du flux comprenant la solution absorbante riche en CO₂ provenant de l'étape a) ;
c) désorber le CO₂ dans un régénérateur du flux comprenant la solution absorbante riche en CO₂ provenant de l'étape a) non recirculée vers l'étape b) à une température comprise entre 80 °C et 120 °C à une pression comprise entre 1,5 et 5 bars et à un débit d'extraction à la vapeur compris entre 10 et 90 % en volume par rapport au débit désorbé de CO₂, **caractérisé en ce que** le flux comprenant la solution absorbante riche en CO₂ est scindé en au moins deux flux au moyen d'un ensemble d'échangeurs de chaleur, avant l'entrée du régénérateur, dans lequel les au moins deux flux sont un flux primaire (10) et un flux secondaire (13), dans lequel les deux sont dirigés vers une partie supérieure et vers un lit intermédiaire du régénérateur (15), respectivement, et dans lequel un chauffage du flux primaire (10) est réalisé dans des échangeurs de chaleur internes (24, 25, 26) de l'ensemble des échangeurs de chaleur (9) et le flux secondaire (13) est obtenu à partir de flux internes (13A, 13B, 13C) qui sont éliminés à la sortie de chacun des échangeurs internes (24, 25, 26) ; et
d) récupérer la solution absorbante (21) résultant de l'étape c) de l'absorbeur de l'étape a), dans lequel le flux de la solution absorbante régénérée extraite (21) résultant de l'étape c) est à son tour scindé en différents sous-flux (21A, 21B, 21C) qui pénètrent dans chacun des échangeurs de chaleur internes (24, 25, 26).

2. Procédé selon la revendication 1, où le CO₂ du flux de gaz à traiter à l'étape a) est transféré vers la phase liquide où il est dissous et se lie chimiquement à l'absorbant.

3. Procédé selon l'une quelconque des revendications précédentes, dans lequel le débit recirculé de l'étape b) atteint entre 25 % et 75 % du total de la solution riche en CO₂ provenant de l'étape a).

4. Procédé selon l'une quelconque des revendications précédentes, dans lequel la recirculation du flux provenant de l'étape b) a lieu dans le lit inférieur de l'absorbeur de l'étape a).

5. Procédé selon l'une quelconque des revendications précédentes, dans lequel les flux provenant de l'étape c) sont introduits dans des zones situées à différentes hauteurs du régénérateur de l'étape d).

6. Système de mise en œuvre du procédé décrit dans l'une quelconque des revendications précédentes, comprenant :
- un absorbeur (2) comprenant une colonne garnie et un lit inférieur, qui a :
- une entrée recevant le flux de gaz à traiter (1) qui viendra en contact dans l'absorbeur (2) avec un liquide absorbant qui est utilisé pour retenir le CO₂ du gaz à traiter (1),
- une sortie pour un flux de solution absorbante riche en CO₂ (4),
- une entrée pour un flux d'entrée de solution absorbante régénérée (23),
- une entrée pour un flux de solution absorbante riche en CO₂ (7), et
- une sortie par laquelle le gaz propre (3) sans CO₂ est déchargé,
- un régénérateur (15)
qui reçoit un flux d'entrée principal dans le régénérateur absorbant riche en CO₂ (12),
d'où part un flux de sortie d'absorbant régénéré extrait (21), et un flux de sortie (16) principalement constitué de CO₂ et de vapeur d'eau, et
comprenant un tambour (20) qui génère l'énergie nécessaire pour régénérer l'absorbant,
- un ensemble d'échangeurs de chaleur (9) situés entre l'absorbeur (2) et le régénérateur (15)
qui reçoit la solution absorbante riche en CO₂ (6),
ainsi qu'une solution absorbante régénérée extraite (21) provenant du régénérateur (15), et
d'où sort un flux d'entrée de solution absorbante régénérée (23) dirigé vers l'absorbeur (2), et
d'où sort un flux d'absorbant riche en CO₂ qui est dirigé vers le régénérateur (15),
dans lequel l'absorbeur (2) comprend en outre une entrée pour une ligne de recirculation (7) de solution absorbante riche en CO₂ recirculée, qui est reconduite vers le lit inférieur de l'absorbeur (2) dans le but d'en augmenter la charge au moyen d'un premier échangeur de chaleur (8A) qui abaisse sa température ;
**caractérisé en ce que** dans l'ensemble des échangeurs de chaleur (9) le flux de solution absorbante riche en CO₂ (6) est scindé en un flux primaire (10) et un flux secondaire (13), dans lequel tous les deux sont dirigés vers la partie supérieure et vers le lit intermédiaire du régénérateur (15), respectivement, **en ce que** l'ensemble des échangeurs de chaleur (9) comprend des échangeurs de chaleur internes (24, 25, 26) qui chauffent le flux primaire (10), et le flux secondaire (13) est obtenu à partir de flux internes (13A, 13B, 13C) qui sont éliminés à la sortie de chacun des échangeurs internes (24, 25, 26), **et en ce que** le flux de la solution absorbante régénérée extraite (21) est à son tour scindé en différents sous-flux (21A, 21B, 21C) qui pénètrent dans chacun des échangeurs de chaleur internes (24, 25, 26).

7. Système selon la revendication 6, **caractérisé en ce qu'**il comprend en outre un deuxième échangeur à contact indirect (11) dans lequel le flux primaire (10) est préchauffé en utilisant le flux de sortie du régénérateur (16), donnant naissance au flux d'entrée principale dans le régénérateur (12).

8. Système selon la revendication 6, **caractérisé en ce que** le flux secondaire (13) est scindé en un flux supplémentaire (14) afin d'être alimenté à différentes hauteurs du régénérateur (15).
